# EUROPÄISCHE PATENTANMELDUNG

(11) **EP 3 127 412 A1**
(43) Veröffentlichungstag der Anmeldung: **08.02.2017**
(21) Anmeldenummer: 16180150.1
(22) Anmeldetag: 19.07.2016
(51) Int. Cl.: A01B 49/06, A01C 7/20

(54) **LANDWIRTSCHAFTLICHE MASCHINE ZUM BEARBEITEN EINES BODENS UND ZUM AUSBRINGEN VON SAATGUT**

(30) Priorität: 03.08.2015 CH 11222015
(71) Anmelder: Krummenacher Saattechnik AG, 6042 Dietwil (CH)
(72) Erfinder: KRUMMENACHER, Pizs, 6042 Dietwil (CH)
(74) Vertreter: Rentsch Partner AG

(57) **Zusammenfassung**

Die Erfindung betrifft eine landwirtschaftliche Maschine (M) zum Bearbeiten eines Bodens und zum Ausbringen eines Saatguts. Die landwirtschaftliche Maschine (M) umfasst: eine Bodenbearbeitungseinrichtung (2) zum Bearbeiten eines Bodens, mindestens ein der Bodenbearbeitungseinrichtung (2) nachlaufendes Schar (4a-4j) zum Ausbringen des Saatguts und mindestens ein dem Schar (4a-4j) nachlaufendes Tiefenführungs- und Andruckrad (8a-8j), wobei für mindestens ein Tiefenführungs- und Andruckrad (8a-8j) eine Federung (7) vorgesehen ist, und wobei mindestens eine Kopplungsvorrichtung (10, 11, 14) vorgesehen ist, um ein gefedertes Tiefenführungs- und Andruckrad (8a-8j) und das betreffende Schar (4a-4j) derart zu koppeln, dass eine Höhenverschiebung des gefederten Tiefenführungs- und Andruckrads (8a-8j) zu einer Verschwenkung und/oder Höhenverschiebung des betreffenden Schars (4a-4j) führt.

## Beschreibung

### TECHNISCHES GEBIET

Die Erfindung bezieht sich auf das Gebiet der Saattechnik. Sie betrifft eine landwirtschaftliche Maschine zum Bearbeiten eines Bodens und zum Ausbringen von Saatgut gemäss dem Oberbegriff des Anspruchs 1.

### STAND DER TECHNIK

Aus dem Stand der Technik sind landwirtschaftliche Maschinen bekannt, um ein Saatgut in einem Boden anzuordnen.

Die DE 3420102 zeigt eine landwirtschaftliche Gerätekombination zur Bodenbearbeitung und zum gleichzeitigen Säen. Eine Kreiselegge weist eine aufgesattelte Sävorrichtung auf. Die Saatrohre der Sävorrichtung münden jeweils in den von den Kreiselrotoren der Kreiselegge ausgeworfenen Erdstrom. Die Mündungsöffnungen sind fluchtend hinter den Rotationsachsen der Kreiselrotoren angeordnet. Dadurch ergibt sich eine gleichmässige Überdeckung des abgelegten Saatguts. Es ist eine Pendellagerung der einzelnen Saatrohre vorgesehen. Hierdurch kann das Saatrohr einem Steinschlag ausweichen.

Die DE 3723616 zeigt ein Bodenbearbeitungsgerät mit angebauter Sämaschine. Ausgehend von bekannten Gerätekombinationen, bei welchen Säschare hinter einer Druckwalze angebracht und federnd gelagert sind, werden für das Ablegen des Saatguts in einer exakten Tiefe und für eine optimale Einbettung Andrückelemente gezeigt, welche zwischen dem Bodenbearbeitungsgerät und der nachlaufenden Druckwalze angeordnet sind. Den Andrückelementen ist jeweils ein Särohr zugeordnet. Die Andrückelemente können relativ zur Druckwalze in der Höhe verstellt werden. Durch die Andrückelemente werden hinter dem Bodenbearbeitungsgerät Rillen in den Boden eingedrückt, in die das Saatgut abgelegt wird.

Es besteht der Wunsch eine konstruktiv einfach aufgebaute landwirtschaftliche Maschine zu schaffen, mit welcher eine Bodenbearbeitung ermöglicht ist und ein Saatgut im Boden in einer gleichbleibenden Tiefe angeordnet werden kann.

### DARSTELLUNG DER ERFINDUNG

Eine Aufgabe der Erfindung besteht darin, zumindest gewisse Nachteile des Standes der Technik zu vermeiden. Eine weitere Aufgabe der Erfindung besteht darin, eine landwirtschaftliche Maschine zu schaffen, die die erwünschten Merkmale aufweist.

Diese und andere Aufgaben werden durch die Merkmale des Anspruchs 1 gelöst. Ausführungsformen der Erfindung ergeben sich aus den abhängigen Ansprüchen. Die erfindungsgemässe landwirtschaftliche Maschine zum Bearbeiten eines Bodens und zum Ausbringen eines Saatguts umfasst: eine Bodenbearbeitungseinrichtung zum Bearbeiten eines Bodens, mindestens ein der Bodenbearbeitungseinrichtung nachlaufendes Schar zum Ausbringen des Saatguts und mindestens ein dem Schar nachlaufendes Tiefenführungs- und Andruckrad, wobei für mindestens ein Tiefenführungs- und Andruckrad eine Federung vorgesehen ist, und wobei mindestens eine Kopplungsvorrichtung vorgesehen ist, um ein gefedertes Tiefenführungs- und Andruckrad und das betreffende Schar derart zu koppeln, dass eine Höhenverschiebung des gefederten Tiefenführungs- und Andruckrads zu einer Verschwenkung und/oder Höhenverschiebung des betreffenden Schars führt. Die landwirtschaftliche Maschine wird von einer Zugmaschine wie z.B. einem Traktor gezogen. Das Gewicht des vorderen Teils der landwirtschaftlichen Maschine kann auf der Zugmaschine abgestützt sein. Die landwirtschaftliche Maschine kann auch komplett gezogen sein und nicht auf der Zugmaschine abgestützt sein. Das Gewicht des hinteren Teils der landwirtschaftlichen Maschine ist auf das mindestens eine Tiefenführungs- und Andruckrad gleichmässig verteilt. Bevorzugt ist das Gewicht des hinteren Teils der landwirtschaftlichen Maschine auf mindestens drei Tiefenführungs- und Andruckräder gleichmässig verteilt. Bei einer Unebenheit des Bodens kann das Tiefenführungs- und Andruckrad nach unten oder oben ausweichen. Gleichzeitig passt sich auch das mindestens eine Schar der Unebenheit an.

Die Bodenbearbeitungseinrichtung ist ausgelegt, um den darunterliegenden Boden fortlaufend umzupflügen, zu lockern, etc. Die Bodenbearbeitungseinrichtung umfasst beispielsweise um eine vertikale oder horizontale Achse drehbare Finger, Klauen, etc., mit welchen der Boden umgepflügt, gelockert, etc. wird. In einer Variante umfasst die Bodenbearbeitungseinrichtung feststehende Werkzeuge, um den Boden umzupflügen, zu lockern, etc. In einer Variante umfasst die Bodenbearbeitungseinrichtung mehrere quer zur Fahrtrichtung angeordnete gleich oder ähnlich ausgebildete Werkzeuge, welche den Boden über die gesamte Breite der landwirtschaftlichen Maschine umpflügen, lockern, etc.

Das Schar kann in irgend einer Art ausgestaltet sein, beispielsweise als Gänsefuss-Schar, als Scheiben- oder Doppelscheiben-Schar, etc. Das Schar kann in der Höhe verstellbar sein, um eine Grundeinstellung der Höhe des Schars einzustellen.

In einer Ausführungsform bilden jeweils ein Schar und ein dem Schar nachlaufendes Tiefenführungs- und Andruckrad eine Funktionseinheit. In einer Variante umfasst eine Funktionseinheit zwei oder mehr Schare und ein den Scharen nachlaufendes Tiefenführungs- und Andruckrad eine Funktionseinheit.

In einer Variante sind mehrere Funktionseinheiten quer zur Fahrtrichtung nebeneinander angeordnet. Die Funktionseinheiten können gegenüber einer quer zur Fahrtrichtung laufenden Bezugslinie versetzt sein. Es kann eine beliebige Anzahl Funktionseinheiten vorgesehen sein, beispielsweise fünf, acht, zwölf, fünfzehn, etc. Die Anzahl Funktionseinheiten und deren jeweilige Breite kann die Gesamtbreite der landwirtschaftlichen Maschine bestimmen, und somit die Bodenbreite, welche durch die landwirtschaftliche Maschine gleichzeitig bearbeitet wird. Die Gesamtbreite der landwirtschaftlichen Maschine kann selbstverständlich durch die Wahl der Anzahl Funktionseinheiten und deren jeweilige Breite auch so bestimmt sein, dass ein Transport der landwirtschaftlichen Maschinen auf dem öffentlichen Strassennetz zulässig ist.

Die Tiefenführungs- und Andruckräder der mehreren Funktionseinheiten können gefedert oder starr angeordnet sein. Die Anzahl gefederter und starrer Tiefenführungs- und Andruckräder kann frei gewählt sein. Es können ein einzelnes Paar, zwei Paare, etc. starre Tiefenführungs- und Andruckräder vorgesehen sein. Es kann auch nur ein einzelnes Tiefenführungs- und Andruckrad starr angeordnet sein. Es können auch alle Tiefenführungs- und Andruckräder gefedert sein. Die Federkraft der gefederten Tiefenführungs- und Andruckräder kann an das Gewicht der landwirtschaftlichen Maschine angepasst sein, beispielsweise kann das Gewicht gleichmässig auf die Tiefenführungs- und Andruckräder verteilt sein. In einer Ausführungsform ist das Tiefenführungs- und Andruckrad zur Tiefenführung der landwirtschaftlichen Maschine und zum Andrücken des Bodens ausgebildet. Die Tiefenführung der landwirtschaftlichen Maschine relativ zum Boden oder auf dem Boden erfolgt entsprechend lokaler Höhenänderungen oder Bodenunebenheiten.

In einer Ausführungsform ist ein hinterer Rahmen vorgesehen zur Halterung des mindestens einen Tiefenführungs- und Andruckrads, wobei die Kopplungsvorrichtung ein Seil umfasst, welches zwischen dem hinteren Rahmen und einem Schar angebracht ist, wobei ein Seilhalter vorgesehen ist, welcher mit dem dem Schar nachlaufenden gefederten Tiefenführungs- und Andruckrad wirkverbunden ist und mit dem Seil derart zusammenwirkt, dass eine Höhenverschiebung des Tiefenführungs- und Andruckrads zu einer Verschwenkung und/oder Höhenverschiebung des Schars führt. Falls das Schar beispielsweise an einem Stein anstösst, kann das Schar nach oben ausweichen oder verschwenken. Das Seil wird dabei entlastet und behindert ein Ausweichen oder Verschwenken des Schars nach oben in keiner Weise. Die Kopplungsvorrichtung kann ein Band umfassen. Die Kopplungsvorrichtung kann ein Gestänge umfassen. Die Kopplungsvorrichtung kann andere Einrichtungen umfassen, um ein gefedertes Tiefenführungs- und Andruckrad und das betreffende Schar derart zu koppeln, dass eine Höhenverschiebung des gefederten Tiefenführungs- und Andruckrads zu einer Verschwenkung und/oder Höhenverschiebung des betreffenden Schars führt.

In einer Ausführungsform ist die Kopplungsvorrichtung in Form eines Gestänges ausgebildet, welches mit dem betreffenden Schar und dem dem Schar nachlaufenden gefederten Tiefenführungs- und Andruckrad derart wirkverbunden ist, dass eine Höhenverschiebung des Tiefenführungs- und Andruckrads zu einer Verschwenkung und/oder Höhenverschiebung des Schars führt.

In einer Ausführungsform ist eine Einstellvorrichtung vorgesehen, um eine Grundeinstellung der Höhe des mindestens einen Schars relativ zum mindestens einen Tiefenführungs- und Andruckrad vorzunehmen.

In einer Ausführungsform ist die Einstellvorrichtung in Form einer wellenartigen Seilhaspel ausgebildet, wobei das Seil an der Seilhaspel auf- und abhaspelbar angebracht ist, um eine Grundeinstellung der Höhe des mindestens einen Schars relativ zum mindestens einen Tiefenführungs- und Andruckrad vorzunehmen. Die Seilhaspel kann ausgebildet sein, ein Band auf- und abzuhaspeln.

In einer Ausführungsform ist die Federung derart angepasst, dass die Tiefenführungs- und Andruckräder jeweils in Abhängigkeit vom Gesamtgewicht der landwirtschaftlichen Maschine gefedert sind.

In einer Ausführungsform ist eine der Bodenbearbeitungseinrichtung nachlaufende Planierschiene oder ein Planierbalken vorgesehen und insbesondere in der Höhe verstellbar.

In einer Ausführungsform ist mindestens ein Schar-Verstellmechanismus vorgesehen, um eine Grundeinstellung der Höhe des mindestens einen Schars vorzunehmen.

In einer Ausführungsform ist mindestens eine Schardruck-Feder vorgesehen, um das mindestens eine Schar mit einer Federkraft zu beaufschlagen. Aufgrund der Federkraft der Schardruck-Feder wird das Schar auf den Boden gedrückt. Die Schardruck-Feder kann eine mechanische, hydraulische oder pneumatische Vorrichtung umfassen, oder eine Kombination davon.

In einer Ausführungsform ist ein Dosiergerät für Saatgut mit mindestens einem Schar zum Ausbringen des Saatguts über mindestens eine Saatgut-Zuleitung verbunden.

Es ist wichtig festzuhalten, dass die beschriebenen Tiefenführungs- und Andruckräder zwei unterschiedliche Funktionen gleichzeitig erfüllen. Einerseits wird eine Tiefenführung der landwirtschaftlichen Maschine gewährleistet. Andrerseits wird eine Tiefenführung des mindestens einen Schars gewährleistet.

Neben einer erfindungsgemässen landwirtschaftlichen Maschine bezieht sich die Erfindung auf ein Nachrüstmaschinenteil zum Nachrüsten einer bestehenden landwirtschaftlichen Maschine, wobei das Nachrüstmaschinenteil mindestens ein Schar, mindestens ein Tiefenführungs- und Andruckrad und mindestens eine Kopplungsvorrichtung umfasst, die derart zusammengebaut sind, dass durch Befestigung des Nachrüstmaschinenteils an einer bestehenden landwirtschaftlichen Maschine eine erfindungsgemässe landwirtschaftliche Maschine erhalten werden kann.

### KURZE BESCHREIBUNG DER ZEICHNUNGEN

Anhand von Figuren, welche lediglich Ausführungsbeispiele darstellen, wird die Erfindung im Folgenden erläutert. Es zeigen:
- Fig. 1: eine Teilansicht einer landwirtschaftlichen Maschine mit quer zur Fahrtrichtung nebeneinander angeordneten Tiefenführungs- und Andruckräder;
- Fig. 2: eine von einer Seite dargestellte Teilansicht einer landwirtschaftlichen Maschine umfassend ein Bodenbearbeitungswerkzeug, ein nachfolgendes Schar sowie ein nachfolgendes Tiefenführungs- und Andruckrad; und
- Fig. 3: eine andere Variante einer von einer Seite dargestellte Teilansicht einer landwirtschaftlichen Maschine umfassend ein Bodenbearbeitungswerkzeug, ein nachfolgendes Schar sowie ein nachfolgendes Tiefenführungs- und Andruckrad.

### WEG(E) ZUR AUSFÜHRUNG DER ERFINDUNG

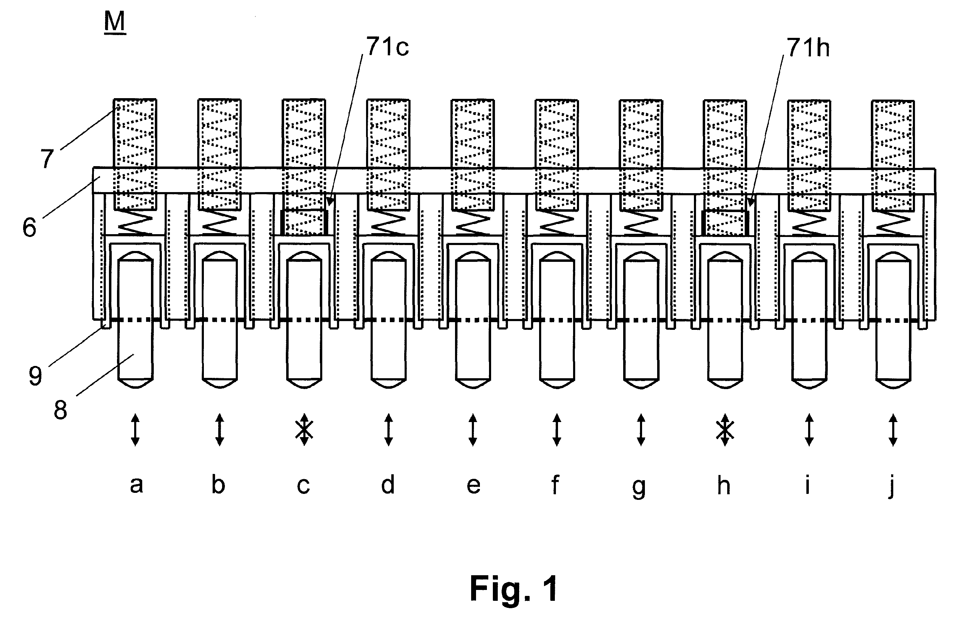

Die Figur 1 zeigt schematisch eine Teilansicht einer landwirtschaftlichen Maschine M mit quer zur Fahrtrichtung nebeneinander angeordneten Funktionseinheiten, die in der Figur 1 mit den Bezugszeichen a-j bezeichnet sind. Das Ausführungsbeispiel der Figur 1 weist zehn Funktionseinheiten a-j auf. Es kann eine andere Anzahl als zehn Funktionseinheiten a-j vorgesehen sein, beispielsweise fünf, acht, zwölf, fünfzehn, etc. Die Anzahl Funktionseinheiten a-j und deren jeweilige Breite kann die Gesamtbreite der landwirtschaftlichen Maschine M bestimmen, und somit die Bodenbreite, welche durch die landwirtschaftliche Maschine M gleichzeitig bearbeitet wird. Die Gesamtbreite der landwirtschaftlichen Maschine M kann durch die Wahl der Anzahl Funktionseinheiten a-j und deren jeweilige Breite auch so bestimmt sein, dass ein Transport der landwirtschaftlichen Maschinen M auf dem öffentlichen Strassennetz zulässig ist.

Wie in der Figur 1 ersichtlich, weisen die Funktionseinheiten a-j der landwirtschaftlichen Maschine M jeweils Tiefenführungs- und Andruckräder 8a-8j auf.

Wie in der Figur 1 schematisch dargestellt ist, umfasst die landwirtschaftliche Maschine M einen hinteren Rahmen 6, der in der Form von Vierkantrohren, an welchen Führungsplatten angeschweisst sind, ausgebildet sein kann. Der hintere Rahmen 6 ermöglicht sowohl die gefederte als auch die ungefederte, starre Halterung von Tiefenführungs- und Andruckräder 8a-8j.

Nachfolgend wird zunächst die gefederte Halterung eines Tiefenführungs- und Andruckrads 8a-8j beschrieben.

Die Tiefenführungs- und Andruckräder 8a-8j sind jeweils in einer U-förmigen Haltevorrichtung 9a-9j gehalten oder gelagert. Beispielsweise sind jeweils die Achsen der Tiefenführungs- und Andruckräder 8a-8j an den Schenkeln der U-förmigen Haltevorrichtungen 9a-9j befestigt. Die U-förmige Haltevorrichtung 9a-9j mit dem daran angebrachten Tiefenführungs- und Andruckrad 8a-8 ist in Bezug auf den hinteren Rahmen 6 verschiebbar geführt. Beispielsweise erfolgt die Führung in im Wesentlichen vertikalen Nuten, welche an ebenfalls U-förmig angeordneten Führungsplatten ausgebildet sind, die am hinteren Rahmen 6 befestigt sind oder Bestandteil des hinteren Rahmens 6 sind. Wie in der Figur 1 schematisch dargestellt ist, erfolgt die im Wesentlichen vertikale Verschiebung einer U-förmigen Haltevorrichtung 9a-9j gegenüber dem hinteren Rahmen 6 jeweils entgegen der Kraft einer Federung 7a-7j, welche beispielsweise in Form von Druckfedern oder Druckzylindern ausgebildet ist, die am hinteren Rahmen 6 befestigt sind. Beispielsweise sind die Druckfedern oder die Druckzylinder in vertikalen Öffnungen eingesetzt, welche sich durch den hinteren Rahmen 6 erstrecken. Die Druckfedern bzw. die Druckzylinder stellen eine Federung 7a-7j für das betreffende Tiefenführungs- und Andruckrad 8a-8j zur Verfügung.

Die Federung 7a-7j ergibt eine federnde Lagerung oder Halterung von einem oder mehreren der in der Figur 1 dargestellten benachbarten Tiefenführungs- und Andruckräder 8a-8j. Bei der Fahrt mit der landwirtschaftlichen Maschine M über eine Bodenunebenheit ergibt sich dadurch eine Höhenverschiebung des betreffenden gefederten Tiefenführungs- und Andruckrads 8a-8j, welches sich in vertikaler Richtung gegenüber der landwirtschaftlichen Maschine M und insbesondere gegenüber dem hinteren Rahmen 6 der landwirtschaftlichen Maschine M nach oben und nach unten verschieben kann.

Nachfolgend wird nun die starre, ungefederte Halterung eines Tiefenführungs-und Andruckrads 8a-8j beschrieben.

Bei einer oder bei mehreren Funktionseinheiten a-j kann die Federung 7a-7j blockiert sein oder aufgrund einer starren Anordnung des betreffenden Tiefenführungs- und Andruckrads 8a-8j gar nicht vorgesehen sein. In der in Figur 1 dargestellten Ausführungsvariante der landwirtschaftlichen Maschine M ist die vertikale Verschiebung des Tiefenführungs- und Andruckrads mit dem Bezugszeichen 8c und des Tiefenführungs- und Andruckrads dem Bezugszeichen 8h gegenüber dem hinteren Rahmen 6 blockiert. Dies kann beispielsweise wie in Figur 1 schematisch dargestellt durch Blockiervorrichtungen 71c, 71h erfolgen, welche im Bereich der Druckfedern oder -zylinder der Federung 7a-7j angebracht sind. Die Blockiervorrichtungen 71 c, 71h können als Gestänge oder Hülse ausgebildet sein, welche eine starre Verbindung zwischen der U-förmigen Haltevorrichtung 9a-9j des betreffenden Tiefenführungs- und Andruckrads 8a-8j und dem hinteren Rahmen 6 erstellen. In einer nicht in der Figur dargestellten Variante sind die Blockiervorrichtungen 71c, 71 h als Gestänge ausgeführt, die die Federwirkung der betreffenden Druckfeder oder -zylinder der Federung 7a-7j unterbinden. In einer anderen Variante sind die Achsen der betreffenden Tiefenführungs- und Andruckräder 8a-8j direkt am hinteren Rahmen 6 befestigt.

Die Federkraft der Druckfedern oder -zylinder der Federung 7a-7j ist an das Gewicht der landwirtschaftlichen Maschine M angepasst. Sind an der landwirtschaftlichen Maschine M beispielsweise zehn Tiefenführungs- und Andruckräder 8a-8j vorgesehen, dann kann die Federkraft pro Druckfeder oder -zylinder der Federung 7a-7j beispielsweise ein Zehntel des Gewichts der landwirtschaftlichen Maschine M betragen. In einer nicht in der Figur dargestellten Variante ist die Federkraft der Druckfedern oder -zylinder der Federung 7a-7j individuell einstellbar. Dies kann beispielsweise vorteilhaft sein, falls die landwirtschaftliche Maschine M auf einem quer zur Fahrrichtung geneigten Boden eingesetzt wird oder sich das Gewicht der landwirtschaftlichen Maschine M verändert, beispielsweise weil sich das Dosiergerät 15, welches das Saatgut enthält, entleert.

Die Anzahl der gefederten Tiefenführungs- und Andruckräder 8a-8j sowie die Anzahl der starren Tiefenführungs- und Andruckräder 8a-8j kann frei gewählt werden. Es können ein einzelnes, ein Paar, zwei Paare, etc. starre Tiefenführungs-und Andruckräder 8a-8j vorgesehen sein. Es können alle Tiefenführungs- und Andruckräder 8a-8j gefedert sein. In der in der Figur 1 dargestellten Ausführungsvariante sind insgesamt zehn Tiefenführungs- und Andruckräder 8a-8j vorgesehen, wobei zwei der Tiefenführungs- und Andruckräder 8a-8j starr angeordnet sind und acht der Tiefenführungs- und Andruckräder 8a-8j gefedert sind. Es können die äussersten Tiefenführungs- und Andruckräder 8a-8j starr angeordnet sein, oder es können dazwischen liegende Tiefenführungs- und Andruckräder 8a-8j starr angeordnet sein. Vorteilhaft ist es, die Anzahl/Anordnung der starren oder gefederten Tiefenführungs- und Andruckräder derart zu wählen, dass eine ideale Stabilisierung besteht und ein ruhiger Lauf gewährleistet ist.

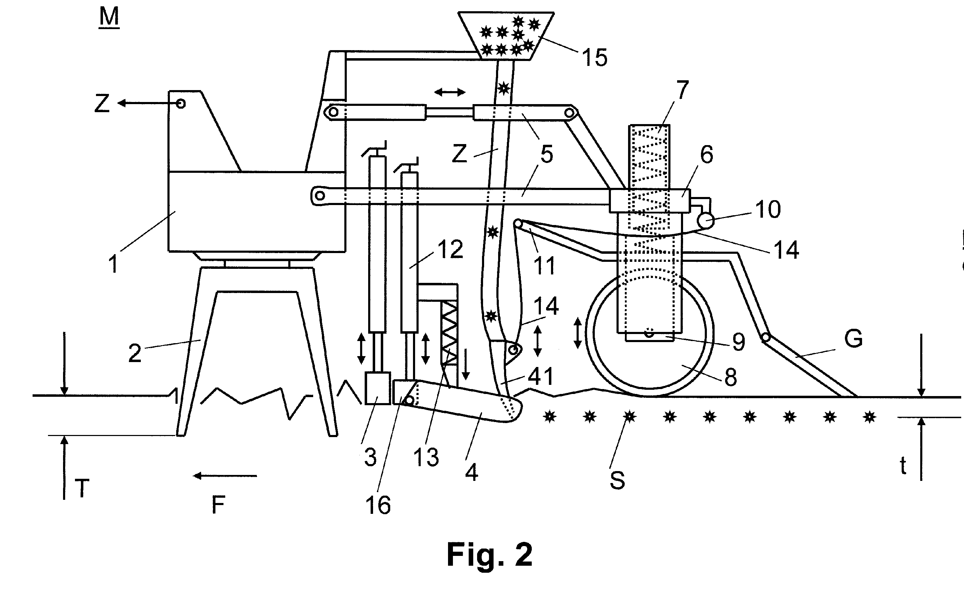

Figur 2 zeigt schematisch eine Seitenansicht einer landwirtschaftlichen Maschine M gemäss der Erfindung. Die Fahrtrichtung F der Maschine ist in der Figur 2 mit Pfeilen in der Richtung von rechts nach links gekennzeichnet. Eine Bodenbearbeitungseinrichtung 2 ist an einem vorderen Gestell 1 angebracht. Das vordere Gestell 1 ist über Verbindungsarme 5 mit dem hinteren Rahmen 6 verbunden. Wie in der Figur 2 schematisch dargestellt ist, lässt sich ein oberer Verbindungsarm 5 in der Länge verkürzen oder verlängern, um das vordere Gestell 1 und den hinteren Rahmen 6 gegeneinander auszurichten, wobei beispielsweise die relative Höhe des hinteren Rahmens 6 gegenüber dem vorderen Gestell 1 einstellbar ist.

Wie in der Figur 2 schematisch durch das Bezugszeichen Z dargestellt ist, wird die landwirtschaftliche Maschine M von einer Zugmaschine, einem Traktor, etc. in der dargestellten Fahrtrichtung gezogen. Das vordere Gestell 1 weist eine nicht näher dargestellte Anschlussvorrichtung wie beispielsweise eine Kupplung auf, um die Zugmaschine, den Traktor, etc. mit der landwirtschaftlichen Maschine M zu verbinden.

Die Bodenbearbeitungseinrichtung 2 ist ausgelegt, um den darunterliegenden Boden fortlaufend zu bearbeiten, zu verfeinern, zu lockern, etc. Die Bodenbearbeitungseinrichtung 2 umfasst beispielsweise um eine vertikale oder horizontale Achse drehbare Finger, Klauen, Messer, etc., mit welchen der Boden bearbeitet, verfeinert, gelockert, etc. wird. In einer Variante umfasst die Bodenbearbeitungseinrichtung 2 feststehende Werkzeuge, um den Boden zu bearbeiten, zu verfeinern, zu lockern, etc. In einer Variante umfasst die Bodenbearbeitungseinrichtung 2 mehrere quer zur Fahrtrichtung angeordnete gleich oder ähnlich ausgebildete Werkzeuge, welche den Boden über die gesamte Breite der landwirtschaftlichen Maschine M bearbeiten, verfeinern, lockern, etc.

Wie in der Figur 2 schematisch dargestellt ist, umfasst die landwirtschaftliche Maschine M mindestens ein der Bodenbearbeitungseinrichtung 2 nachlaufend angeordnetes Schar 4. Das Schar 4 kann in irgend einer Art ausgestaltet sein, beispielsweise als Gänsefuss-Schar, als Scheiben- oder Doppelscheiben-Schar, Messerschar, etc. Das Schar 4 ist in der Höhe verstellbar angebracht, beispielsweise wie in Figur 2 schematisch dargestellt durch einen Schar-Verstellmechanismus 12, welcher an der landwirtschaftlichen Maschine M angebracht ist und mit welchem das Schar 4 in der Höhe nach oben oder nach unten verstellt werden kann. Zwischen dem Schar 4 und dem Schar-Verstellmechanismus 12 ist wie in Figur 2 schematisch dargestellt eine Schardruck-Feder 13 angeordnet. Dadurch kann der Druck eingestellt werden, mit welchem das Schar 4 auf den Boden gedrückt wird. Wird das Schar 4 beispielsweise über einen Stein geführt, kann das Schar 4 bzw. das nachlaufende Ende des Schars 4 entgegen der Kraft der Schardruck-Feder 13 nach oben ausweichen bzw. ausschwenken, um danach wieder in den Boden einzudringen. Das Schar 4 kann an einer Scharhalterung 16 angebracht sein, welche am Schar-Vertellmechanismus 12 befestigt ist. Die Scharhalterung 16 kann einen Drehpunkt aufweisen, um welchen sich das Schar 4 drehen kann und sich ein Ende des Schars 4 in der Höhe verstellen kann. Die Scharhalterung 16 kann ausgebildet sein, um das Schar 4 leicht auswechseln zu können.

Wie in Figur 2 schematisch dargestellt ist, ist das Schar 4 über eine Saatgut-Zuleitung Z mit einem Dosiergerät 15 verbunden, welches das Saatgut S enthält und dieses dem Schar 4 über die Zuleitung in einer gewünschten Dosierung zuführt. Wie erwähnt, sind quer zur Fahrtrichtung der landwirtschaftlichen Maschine M mehrere Schare 4a-4j angeordnet, welche jeweils über eine Zuleitung mit dem Dosiergerät 15 verbunden sind. In einer Variante sind quer zur Fahrtrichtung mehrere Dosiergeräte 15 vorgesehen.

Wie in der Figur 2 schematisch dargestellt ist, umfasst die landwirtschaftliche Maschine mindestens ein dem Schar 4 nachlaufend angeordnetes Tiefenführungsund Andruckrad 8. Wie erwähnt sind quer zur Fahrtrichtung der landwirtschaftlichen Maschine M mehrere Tiefenführungs- und Andruckräder 8a-8j angeordnet. Wie in der Figur 2 dargestellt ist, ist das Tiefenführungs- und Andruckrad 8 wie oben beschrieben an einem U-förmigen Halter 9 angebracht, welcher entgegen einer Federkraft einer Federung 7 in Form einer Druckfeder oder eines Druckzylinders im hinteren Rahmen 6 geführt ist, wobei damit das Tiefenführungs- und Andruckrad 8 gefedert ist.

Wie in der Figur 2 schematisch dargestellt ist, ist eine Kopplungsvorrichtung 10, 11, 14 vorgesehen, die derart ausgebildet ist, dass eine Höhenverschiebung des Tiefenführungs- und Andruckrads 8 zu einer Verschwenkung und/oder Höhenverschiebung des Schars 4 führt. Ein Seil 14 ist am Schar 4 befestigt und ist über einen Seilhalter 11 zu einer wellenartigen Seilhaspel 10 geführt, welche am hinteren Rahmen 6 befestigt ist. Der Seilhalter 11 ist mit dem dem Schar 4 nachlaufenden gefederten Tiefenführungs- und Andruckrad 8 wirkverbunden. Beispielsweise ist der Seilhalter 11 am U-förmigen Halter 9 befestigt, welcher am hinteren Rahmen 6 in vertikaler Richtung entgegen der Federung 7 beweglich geführt ist und das Tiefenführungs- und Andruckrad 8 hält, wobei dieses gefedert ist. Es besteht somit eine Wirkverbindung zwischen dem Seilhalter 11 und dem Tiefenführungs-und Andruckrad 8, womit sich eine Höhenverschiebung des Tiefenführungs- und Andruckrades 8 an den Seilhalter 11 überträgt. Eine Auslenkung des Seilhalters 11 nach oben führt dazu, dass das Seil 14 beim Seilhalter 11 nach oben angehoben bzw. nach oben gestossen wird. Da das Seil 14 am hinteren Rahmen 6 befestigt ist und deshalb keine andere Ausweichmöglichkeit besteht, führt das Anheben des Seilhalters 11 zu einem Anheben oder Verschwenken des Schars 4 nach oben. Das Anheben oder Verschwenken nach oben des Schars 4 erfolgt entgegen der Federkraft der Schardruck-Feder 13. Eine nachfolgende Höhenverschiebung des Tiefenführungs- und Andruckrads 8 nach unten führt zu einer entsprechenden Höhenverschiebung des Seilhalters 11, womit sich das Schar 4 aufgrund der Schardruck-Feder 13 und aufgrund der Gewichtskraft wieder nach unten bewegt oder nach unten verschwenkt. Das Seil 14 ist zwischen dem Schar 4 und dem hinteren Rahmen 6 über den Seilhalter 11 gespannt.

In einer Variante ist statt dem Seil 11 ein Band vorgesehen, um die Funktion der Kopplungsvorrichtung bereitzustellen.

Eine Verschwenkung oder Verschiebung des Schars 4 nach oben aufgrund beispielsweise eines Steins ist problemlos möglich, wobei sich das Seil 14 zunächst entspannt und dann wieder spannt. Bei einer Bodenunebenheit passt sich das Tiefenführungs- und Andruckrad 8 nach oben oder unten an, wobei sich das Schar 4 der Unebenheit ebenfalls anpasst.

Das Seil 14 ist am hinteren Rahmen 6 an einer wellenartigen Seilhaspel 10 befestigt. Bei mehreren nebeneinander angeordneten Funktionseinheiten a-j kann jeweils je ein Seil 14a-14j zwischen dem betreffenden Schar 4a-4j und der Seilhaspel 10, welche sich über die Breite der Funktionseinheiten a-j erstreckt, vorgesehen sein. Durch aufhaspeln oder abhaspeln dieser Seile 14a-14j kann für alle Schare 4a-4j gleichzeitig eine Grundeinstellung der Höhe der Schare 4a-4j relativ zu den Tiefenführungs- und Andruckräder 8a-8j vorgenommen werden. Es ergibt sich eine gleichmässige Tiefenführung des Schars.

Durch das Einstellen der Höhe der Schare 4a-4j relativ zu den Tiefenführungs- und Andruckräder 8a-8j ergibt sich zugleich eine Einstellung der Höhe der Schare 4a-4j relative zu anderen Bestandteilen der landwirtschaftlichen Maschine M, also beispielsweise relativ zum hinteren Rahmen 6, zum vorderen Gestell 1, zu den Verbindungsarmen 5, etc.

Das in Figur 2 dargestellte Seil 14 führt zu einer wellenartigen Seilhaspel 10, welche in Fahrtrichtung gesehen an einem hinteren Ende des hinteren Rahmens 6 angebracht ist. Die Seilhaspel 10 kann an einer anderen Stelle vorgesehen sein, beispielsweise an einem vordern Ende des hinteren Rahmens 6, an einem Verbindungsarm 5, am Seilhalter 11, etc. Das Seil 14 muss derart angebracht sein, dass die Funktion der Kopplungseinrichtung zur Verfügung gestellt ist.

Wie in der Figur 2 schematisch dargestellt, ist zwischen der Bodenbearbeitungseinrichtung 2 und dem Schar 4 eine Planierschiene oder ein Planierbalken 3 vorgesehen. Die Planierschiene oder der Planierbalken 3 ist wie in der Figur 2 schematische dargestellt in der Höhe einstellbar. Der durch die Bodenbearbeitungseinrichtung 2 bearbeitete Boden kann durch die Planierschiene oder den Planierbalken 3 in einer gewünschten Weise geglättet werden und es kann eine gewünschte Ausplanierung vorgenommen werden. Eine solche Ausplanierung ist nicht zwingend und es kann in diesem Fall auf den Planierbalken verzichtet werden.

Den Tiefenführungs- und Andruckräder 8a-8j nachfolgend können ein oder mehrere Saatstriegel G vorgesehen sein, um für eine krümelige Oberfläche des Bodens zu sorgen. Die Saatstriegel können jeweils quer zur Fahrtrichtung gesehen zwischen den Tiefenführungs- und Andruckräder 8a-8j angebracht sein und in Fahrtrichtung gesehen hinter den Tiefenführungs- und Andruckräder 8a-8j den Boden bearbeiten. Die Saatstriegel können in Paketen zusammengebaut sein. Beispielsweise können zwei Pakete mit Saatstriegel vorgesehen sein, die sich über die gesamte Breite der bearbeiteten Fläche erstrecken.

Wie in der Figur 2 schematisch dargestellt, ist die Bodenbearbeitungseinrichtung 2 vorgesehen, den Boden in einer Tiefe T zu bearbeiten. Das Schar 4 ist vorgesehen, das Saatgut S in einer Tiefe t im Boden einzubringen.

Wie in der Figur 2 schematisch dargestellt, umfasst das Schar 4 den schwenkbaren Teil mit dem Bezugszeichen 4 und den daran fest angebrachten Zuleitungsteil 41, an welchem die Zuleitung vom Dosiergerät 15 für das Saatgut S angeschlossen ist. Das Seil 14 ist in der in Figur 2 dargestellten Variante am Zuleitungsteil 41 des Schars 4 befestigt. Es ist denkbar, das Seil 14 an einer anderen Stelle des Schars 4 zu befestigen.

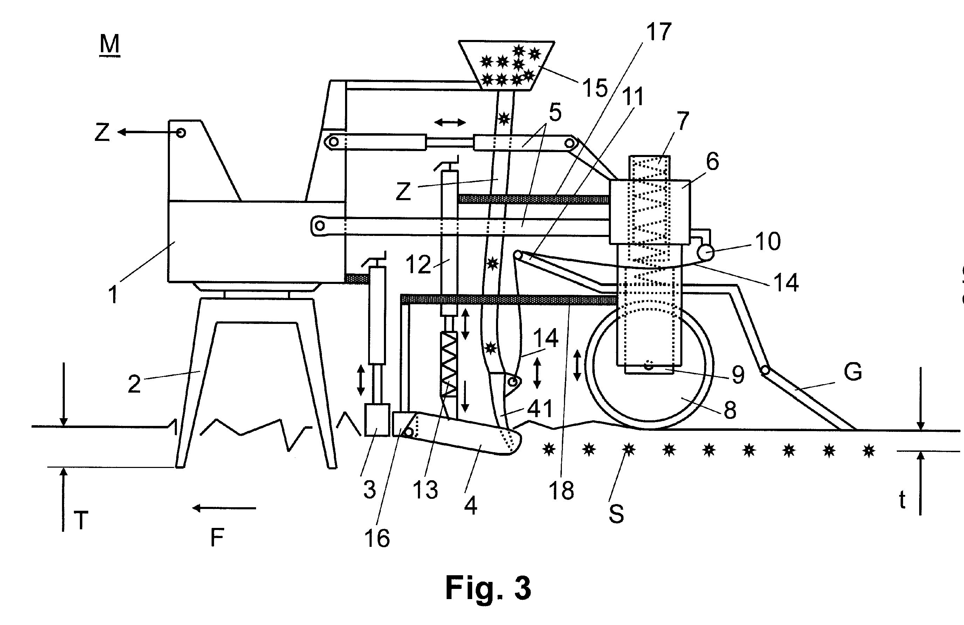

Figur 3 zeigt eine andere Ausführungsform einer landwirtschaftlichen Maschine M, welche sich von der in Figur 2 gezeigten landwirtschaftlichen Maschine M wie folgt unterscheidet.

Der Planierbalken 3 ist nicht über eine Höhenverstelleinrichtung an Verbindungsarmen 5 befestigt, sondern über eine Höhenverstelleinrichtung am vorderen Gestell 1 befestigt.

Die Scharhalterung 16 ist nicht über den Schar-Verstellmechanismus 12 an Verbindungsarmen 5 befestigt, sondern über einen Arm 18 am hinteren Rahmen 6 befestigt. Es kann eine Höhenverstelleinrichtung vorgesehen sein, um die Scharhalterung 16 in der Höhe zu verstellen.

Das Schar 4 ist nicht über die Schardruck-Feder 13 und den Schar-Verstellmechanismus 12 an Verbindungsarmen 5 befestigt, sondern über die Schardruck-Feder 13, den Schar-Verstellmechanismus 12 und einen Arm 17 am hinteren Rahmen 6 befestigt.

Bei der in Figur 3 dargestellte Ausführungsform einer landwirtschaftlichen Maschine M ist der hintere Rahmen 6 und das Schar 4 miteinander befestigt. Dieser Teil der landwirtschaftlichen Maschine M kann separat hergestellt werden und bestehende landwirtschaftliche Maschinen können einfacher nachgerüstet werden.

## Patentansprüche

1. Landwirtschaftliche Maschine (M) zum Bearbeiten eines Bodens und zum Ausbringen eines Saatguts, umfassend: eine Bodenbearbeitungseinrichtung (2) zum Bearbeiten eines Bodens, mindestens ein der Bodenbearbeitungseinrichtung (2) nachlaufendes Schar (4a-4j) zum Ausbringen des Saatguts und mindestens ein dem Schar (4a-4j) nachlaufendes Tiefenführungs- und Andruckrad (8a-8j), wobei für mindestens ein Tiefenführungs- und Andruckrad (8a-8j) eine Federung (7) vorgesehen ist, und wobei mindestens eine Kopplungsvorrichtung (10, 11, 14) vorgesehen ist, um ein gefedertes Tiefenführungs- und Andruckrad (8a-8j) und das betreffende Schar (4a-4j) derart zu koppeln, dass eine Höhenverschiebung des gefederten Tiefenführungs- und Andruckrads (8a-8j) zu einer Verschwenkung und/oder Höhenverschiebung des betreffenden Schars (4a-4j) führt.

2. Landwirtschaftliche Maschine (M) nach Anspruch 1, wobei jeweils ein Schar (4a-4j) und ein dem Schar (4a-4j) nachlaufendes Tiefenführungs- und Andruckrad (8a-8j) eine Funktionseinheit (a-j) bilden.

3. Landwirtschaftliche Maschine (M) nach Anspruch 2, wobei mehrere Funktionseinheiten (a-j) quer zur Fahrtrichtung nebeneinander angeordnet sind.

4. Landwirtschaftliche Maschine (M) nach Anspruch 1 oder 2, wobei das mindestens eine Tiefenführungs- und Andruckrad (8a-8j) zur Tiefenführung der landwirtschaftlichen Maschine (M) und zum Andrücken des Bodens ausgebildet ist.

5. Landwirtschaftliche Maschine (M) nach einem der Ansprüche 1 bis 4, wobei ein hinterer Rahmen (6) vorgesehen ist zur Halterung des mindestens einen Tiefenführungs- und Andruckrads (8a-8j), wobei die Kopplungsvorrichtung (10, 11, 14) ein Seil umfasst, welches zwischen dem hinteren Rahmen (6) und einem Schar (4a-4j) angebracht ist, wobei ein Seilhalter (11) vorgesehen ist, welcher mit dem dem Schar (4a-4j) nachlaufenden gefederten Tiefenführungs- und Andruckrad (8a-8j) wirkverbunden ist und mit dem Seil derart zusammenwirkt, dass eine Höhenverschiebung des Tiefenführungs-und Andruckrads (8a-8j) zu einer Verschwenkung und/oder Höhenverschiebung des Schars (4a-4j) führt.

6. Landwirtschaftliche Maschine (M) nach einem der Ansprüche 1 bis 4, wobei die Kopplungsvorrichtung (10, 11, 14) in Form eines Gestänges ausgebildet ist, welches mit dem betreffenden Schar (4a-4j) und dem dem Schar (4a-4j) nachlaufenden gefederten Tiefenführungs- und Andruckrad (8a-8j) derart wirkverbunden ist, dass eine Höhenverschiebung des Tiefenführungs- und Andruckrads (8a-8j) zu einer Verschwenkung und/oder Höhenverschiebung des Schars (4a-4j) führt.

7. Landwirtschaftliche Maschine (M) nach einem der Ansprüche 1 bis 6, wobei eine Einstellvorrichtung (10) vorgesehen ist, um eine Grundeinstellung der Höhe des mindestens einen Schars (4a-4j) relativ zum mindestens einen Tiefenführungs- und Andruckrad (8a-8j) vorzunehmen.

8. Landwirtschaftliche Maschine (M) nach Anspruch 5 und 7, wobei die Einstellvorrichtung (10) in Form einer wellenartigen Seilhaspel (10) ausgebildet ist, und wobei das Seil an der Seilhaspel (10) auf- und abhaspelbar angebracht ist, um eine Grundeinstellung der Höhe des mindestens einen Schars (4a-4j) relativ zum mindestens einen Tiefenführungs- und Andruckrad (8a-8j) vorzunehmen.

9. Landwirtschaftliche Maschine (M) nach einem der Ansprüche 1 bis 8, wobei die Federung (7) derart angepasst ist, dass die Tiefenführungs- und Andruckräder (8a-8j) jeweils in Abhängigkeit vom Gesamtgewicht der landwirtschaftlichen Maschine (M) gefedert sind.

10. Landwirtschaftliche Maschine (M) nach einem der Ansprüche 1 bis 9, wobei eine der Bodenbearbeitungseinrichtung (2) nachlaufende Planierschiene oder ein Planierbalken (3) vorgesehen ist und insbesondere in der Höhe verstellbar ist.

11. Landwirtschaftliche Maschine (M) nach einem der Ansprüche 1 bis 10, wobei mindestens ein Schar-Verstellmechanismus (12a-12j) vorgesehen ist, um eine Grundeinstellung der Höhe des mindestens einen Schars (4a-4j) vorzunehmen.

12. Landwirtschaftliche Maschine (M) nach einem der Ansprüche 1 bis 11, wobei mindestens eine Schardruck-Feder (13) vorgesehen ist, um das mindestens eine Schar (4a-4j) mit einer Federkraft zu beaufschlagen.

13. Landwirtschaftliche Maschine (M) nach einem der Ansprüche 1 bis 12, wobei ein Dosiergerät (15) für Saatgut (S) mit mindestens einem Schar (4a-4j) zum Ausbringen des Saatguts (S) über mindestens eine Saatgut-Zuleitung (Z) verbunden ist.

14. Nachrüstmaschinenteil zum Nachrüsten einer bestehenden landwirtschaftlichen Maschine, wobei das Nachrüstmaschinenteil mindestens ein Schar (4), mindestens ein Tiefenführungs- und Andruckrad (8a-8j) und mindestens eine Kopplungsvorrichtung (10, 11, 14) umfasst, die derart zusammengebaut sind, dass durch Befestigung des Nachrüstmaschinenteils an einer bestehenden landwirtschaftlichen Maschine eine landwirtschaftliche Maschine (M) nach einem der Ansprüche 1 bis 13 erhalten werden kann.
